(19) Europäisches Patentamt
European Patent Office
Office européen des brevets

(11) **EP 4 703 969 A1**

(12) **EUROPEAN PATENT APPLICATION**

(43) Date of publication:
04.03.2026 Bulletin 2026/10

(51) International Patent Classification (IPC):
*G06N 3/045* (2023.01)     *G06N 3/0475* (2023.01)
*G06N 5/045* (2023.01)

(21) Application number: 25195867.4

(22) Date of filing: 14.08.2025

(52) Cooperative Patent Classification (CPC):
G06N 3/0475; G06N 3/045; G06N 5/045

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 29.08.2024 IL 31533624

(71) Applicants:
• Fujitsu Limited
Kawasaki-shi, Kanagawa 211-8588 (JP)
• B.G. Negev Technologies and Applications Ltd
8410501 Beer Sheva (IL)

(72) Inventors:
• BROKMAN, Jonathan
Slough, SL1 2BE (GB)
• HOFMAN, Omer
Slough, SL1 2BE (GB)

• VAINSHTEIN, Roman
Slough, SL1 2BE (GB)
• GILONI, Amit
Slough, SL1 2BE (GB)
• SHIMIZU, Toshiya
Kawasaki-shi, 211-8588 (JP)
• SINGH, Inderjeet
Slough, SL1 2BE (GB)
• RACHMIL, Oren
Slough, SL1 2BE (GB)
• ZOLFI, Alon
8410501 Beer Sheva (IL)
• SHABTAI, Asaf
8410501 Beer Sheva (IL)
• FUJISHIMA, Yuki
Kawasaki-shi, 211-8588 (JP)
• KOJIMA, Hisashi
Kawasaki-shi, 211-8588 (JP)

(74) Representative: Haseltine Lake Kempner LLP
Cheapside House
138 Cheapside
London EC2V 6BJ (GB)

(54) **SYSTEMS AND METHODS FOR ATTRIBUTION IN MACHINE LEARNING**

(57) A computer-implemented method of training a machine learning attribution model configured to provide data attribution to an output generation of a generative artificial intelligence (AI) model, comprising: determining changes in the generative AI model during a training process; aggregating the changes into an attribution table; and training the attribution model comprising inputting data from the attribution table into the attribution model.

FIG. 11

**Description**

**Field of the Invention**

The present invention relates to systems and methods for providing data attribution in generative artificial intelligence models, and particularly to providing data attribution in diffusion models.

**Background of the Invention**

As generative artificial intelligence (AI) technology advances, the need for understanding and controlling generative AI outputs becomes more critical. However, generative AI technology is complex and inherently not transparent, thus understanding how content is generated is a significant challenge.

Generative AI models are facing challenges for instance related to transparency and intellectual property. An example is the challenges which arise when a generated image is influenced by copyrighted images from the training data, a plausible scenario in internet-collected data. Indeed, typically each image generated by these models is influenced by a subset of the training data, which might include copyrighted content. This raises legal questions about who owns these newly generated images, and potentially to what extent. Hence understanding how pieces of training data contribute to a model's output - a task known as data attribution - is at the core of these technological and legal challenges and becomes crucial for transparency of content origins, legal compliance, and ethical usage.

In general, data attribution entails the identification of the influential training data that affects and contributes to the trained model's predictions. In the context of generative models, it involves mapping the generated outputs to the training examples that facilitate their creation, an important step for understanding model behavior. Beyond generative AI, data attribution in the context of deep learning has a well-established history. It usually entails the post-hoc analysis of a trained model, i.e. without access to the training process. Classical approaches employ loss gradients and Hessians to quantify how each training sample impacts the dynamics of pre-trained weights in their local environment and consequently the model's output.

Data attribution is therefore important for providing, for instance, explainability of training data to output relations as well as training data insights and improvements. For example, data attribution is important for interpretability and debugging, for instance in understanding the impact of training data on model output which is key for correcting biases and errors. As another example, data attribution can be used to improve model robustness and detect and avoid poisoning attacks, for instance to detect training samples that harm performance. In another example, data attribution can be used for improved data curation and quality, for instance to aid in curating high-quality datasets, ensuring that the model is trained on relevant and diverse data, which in turn affects the quality of the model outputs, and may boost efficiency by omitting unused data.

In addressing data attribution concerns within the field of generative AI there are broadly two approaches. The first approach is to effectively attempt to avoid data attribution concerns altogether by controlling the dataset used for training, such that the training dataset is restricted to a subset of data which is known and deemed legally safe to use. The result is that any generated images can be related to any training sample without any legal concern, such as without copyright-related concerns. This approach comes at great cost: it is inefficient, expensive, and restrictive. Curating the dataset is expensive, and resolving to smaller manageable datasets deteriorates the model's performance. Further, it does not work for models in which the training dataset cannot be controlled, such as with customised or fine-tuned models in which users control and choose their own datasets to customize and train a base model. In these examples users are free to choose copyrighted material. The second approach is to provide data attribution technologies which attempt to determine the extent of attribution of training images on generated images. These approaches are inaccurate, and as noted above tend to focus on post-training analysis of the models. An example of a known process includes loss-derivative based approaches following the classical theory of data attribution to obtain attribution similarly to methods originally designed for discriminative models, i.e. not generative AI, such as image classifiers.

Hence there is a need for improved data attribution for generative AI models. For instance, there is a need for methods of data attribution capable of increased accuracy and efficiency in determining the influence and/or contribution of input training images on the generation outputs.

Certain aspects of the present disclosure and their embodiments may provide solutions to these or other challenges.

**Statement of the Invention**

Aspects of the invention are defined by the accompanying claims. Advantageous optional features are defined in the dependent claims.

According to an aspect there is provided a computer-implemented method of training a machine learning attribution model configured to provide data attribution to an output generation of a generative artificial intelligence (AI) model, comprising: determining changes in the generative AI model during a training process; aggregating the changes into an attribution table; and training the attribution model comprising inputting data from the attribution table into the attribution model.

Various aspects and embodiments of the invention are described without limitation below, with reference to the figures.

**Brief Description of the Drawings**

There now follows, by way of example only, a detailed description of preferred embodiments of the present invention, with reference to the figures identified below.

**Figure 1** illustrates a method;
**Figure 2** illustrates a process;
**Figure 3** illustrates an example machine learning model architecture;
**Figure 4** illustrates a process;
**Figure 5** illustrates an example data attribution table;
**Figure 6** illustrates a process;
**Figure 7** illustrates a process;
**Figure 8** illustrates a method;
**Figure 9** is a table of results;
**Figure 10** is a table of results;
**Figure 11** illustrates an apparatus.

**Detailed Description**

In the following description, functionally similar parts carry the same reference numerals between figures. The following sets forth specific details, such as particular aspects, embodiments or examples for purposes of explanation and not limitation. It will be appreciated by one skilled in the art that other examples may be employed apart from these specific details. Aspects and embodiments of the invention are now described, without limitation and by way of example only, with reference to the accompanying drawings.

Aspects of the present application provide approaches to data attribution in the use of generative AI models, where much of the state of the art of data attribution is concerned only with discriminative models (i.e. image classifiers). Within this, specific embodiments of the present application are concerned with data attribution specifically in generative AI diffusion models, for instance text-to-image diffusion models.

Text-to-image diffusion models generate images by mapping noise to image, and generations are often conditioned on encoded text input as prompts (e.g. 'generate an image of a spaceman on a horse'). Diffusion model development can be split into two methodologies: base model training and fine-tuning. Base model training entails compiling extensive datasets from varied sources. Their large scale leads to control issues over copyrighted content, as seen, for instance, in the **LAION** and **IMAGEN** datasets. In contrast, diffusion model fine-tuning, used for model customization, involves using smaller and specific datasets as well as efficient fine-tuning (i.e. customising) methodologies to customize pre-trained base models (i.e. foundation models) for new capabilities. This offers a pathway to adapt diffusion models in low-resource settings. Consequently, customization became a popular tool among companies and private creators alike, increasing the risk of copyright infringement by unaware creators. As such, recent developments in the field expanded the data attribution domain to analyse diffusion models.

However, state of the art approaches to data attribution in generative AI models suffer from numerous disadvantages. For instance, state of the art approaches focus on base-model scenarios without direct access to the training process. This avoiding of dependence on training access is a practical approach for base-models due to the expensive, resource intensive, and time-consuming impact of attempting to analyse the training. As such, these state-of-the-art approaches focus on post-training analysis of the base-models. However, this approach leads to inaccuracies.

In particular, state-of-the-art approaches can be broadly divided into two categories. First, loss-derivative based approaches. These follow the classical theory of data attribution, and operate obtain attribution similarly to methods originally designed for discriminative models. Examples are DTRAK (Zheng, X., Pang, T., Du, C., Jiang, J., Lin, M.: Intriguing properties of data attribution on diffusion models. In: The Twelfth International Conference on Learning Representations (2024), https://openrev'iew.net/forum?id=vKViCoKGcB) and DataInf (Kwon, Y., Wu, E., Wu, K., Zou, J.: Datainf: Efficiently estimating data influence in loRA-tuned LLMs and diffusion models. In: The Twelfth International Conference on Learning Representations (2024), https://openreview.net/forum?id= 9m02ib92Wz). Second, generation analysis approaches which diverge from classical solutions and directly analyse the generative model's generations. An example is GenDataAttribution (Wang, S.Y., Efros, A.A., Zhu, J.Y., Zhang, R.: Evaluating data attribution for text-to-image models. In Proceedings of the IEEE/CVF International Conference on Computer Vision, pp. 7192-7203. 2023). However, both of these approaches are disadvantageous. For instance, both these approaches have reduced data attribution accuracy as they are carried out after training, on the final trained model, and thereby fail to perceive let alone leverage the valuable information for data attribution which is embodied in the training stage. Further, these approaches are not compatible with fine-tuned (i.e. customized) models, and do not appropriately address the mixed-concept generations which diffusion models enable, where the different concepts might come from different domains or could represent different styles, objects, or themes etc. and where the diffusion model generates new data that blends features from these varied concepts in a coherent way to output a generated image.

For instance, DTRAK uses both the attribution and evaluation methods proposed in TRAK (Park, S. M., Georgiev, K., Ilyas, A., Leclerc, G., & Madry, A. (2023, July). TRAK: Attributing Model Behavior at Scale. In International Conference on Machine Learning (pp. 27074-27113). PMLR) but does so for diffusion models. TRAK is a loss-gradient based approach originally designed for discriminative models. As part of this process, TRAK suggested an evaluation metric relating attribution to the loss of leave-out re-training. DataInf proposes an approximation of the inverse loss Hessian for diffusion models. While the true Hessian is summed over training samples, DataInf performs the inverse of each summand and before summation, enabling rank-aware algorithms. Here the evaluation is with respect to the true Hessian, and theoretical bounds of the approximation are derived.

In GenDataAttribution, the authors employ thousands of single-image customized models to create a dataset of generated images, ensuring that a single known training image influences the output. These generated images provide ground-truth data, which GenDataAttribution leverages for contrastive learning of an attribution embedding space. In particular, this method consists of three main steps. First, the generation pairs of real images (exemplars) and their synthetic corresponding set of images, where the synthetic images were obtained using thousands stable diffusion models, each generating images of a single known attribution, its "exemplar" image. Second, a contrastive learning approach is used to train a model to attribute each synthesized set of images with its exemplar. Third, from the learned feature similarities, soft probabilistic influences are obtained. However, this method suffers from a number of disadvantages. First, the number of trained models required for it to produce data attribution output is in the thousands. Second, this method is not capable of providing data attribution to image generations create from mixed concepts.

Hence, each of these state-of-the-art approaches suffer from distinct disadvantages. They each attempt data attribution for image generative models by performing post-training analysis, which results in the loss of valuable information from the training process. In particular, they each calculate image-level data attribution via loss differentials, or concept-level attribution via analysing the generated images. They each focus on base models, and are not concerned with fine-tuned customized models and nor are they suitable for fine-tuned custom models, as they are not able to handle mixed-concept image generations. They are also not suitable for online learning, since they would require full-re-calculation of the attribution with every model update, and hence cannot support continual learning.

Aspects of the present application have advantageously identified and facilitated leveraging the training stage of generative AI models to gain insights for data attribution.

Aspects of the present application have advantageously identified that for fine-tuning scenarios the fewer required resources allows access to the training stage to become practically feasible, and that leveraging such access may advantageously improve the accuracy of data attribution given that the training stage holds valuable information which can be advantageously harnessed, such as allowing crucial insight into how the training images shape the generated outputs. Accordingly, aspects of the present application are concerned with data attribution in fine-tuned (i.e. customised) diffusion models.

Aspects of the present application may advantageously provide improved data attribution granularity. For instance, in specific embodiments a specialised novel loss function is used which provides advantageously nuanced insights into the model's training process.

Aspects of the present application may advantageously provide data attribution in generative AI models - for instance fine-tuned customised diffusion models - in a manner with improved accuracy, in particular where the attribution is correlated to the model's behaviour, and further may do so with improved computational efficiency.

Aspects and embodiments of the present application advantageously leverage the accessibility of the training, such as fine-tuning (customization), process in generative AI models, such as diffusion models, for improved data attribution. In particular, aspects of the present application may apply two broad steps. First, data attribution values are collected throughout the fine-tuning customization process and aggregated into an attribution table. In particular, in specific embodiments the internal (latent) representations of the generative model (e.g. diffusion model) during the fine-tuning phase are monitored. These changes are efficiently monitored and quantified, and the attribution is calculated from the quantification of these changes. Second, a separate attribution model is trained on the attribution table data such that the information gleaned about how the generative (e.g. diffusion) model uses training data when generating outputs can be learned and generalised to unseen future generations of the model. In particular, specific embodiments the training of the attribution model may be via a specialized loss function that advantageously captures the fine granularity of the attributions, and thereby improves accuracy.

For instance, certain aspects of the present application may provide a first-of-its-kind integration of two methodologies: exploring training access for data attribution and leveraging generative (e.g. diffusion) model characteristics. In aspects there is provided monitoring internal representations of generative (e.g. diffusion) models for changes during training and aggregating this information for data attribution, thereby making a new contribution to the field. State of the art methodologies fail to explore the utilization of training access for generative (e.g. diffusion) model data attribution. Aspects of the present application provide a generation analysis approach, where the generation throughout training is monitored.

Aspects of the invention are defined by the accompanying claims. Advantageous optional features are defined in the dependent claims.

According to an aspect there is provided a computer-implemented method of training a machine learning attribution model configured to provide data attribution to an output generation of a generative artificial intelligence (AI) model, comprising: determining changes in the generative AI model during a training process; aggregating the changes into an attribution table; and training the attribution model comprising inputting data from the attribution table into the attribution model.

Optionally, the training process is a fine-tuning process.

Optionally, determining the changes comprises determining the changes in internal representations in the generative AI model whilst training data is input into and processed by the generative AI model during the training process.

Optionally, determining the changes in internal representations of the generative AI model during the training process comprises, at the same time as performing the training process: inputting prompt concepts into the generative AI model configured to cause the generative AI model to generate output generations; and determining the changes in internal representations of the prompt concepts.

Optionally, the generative AI model is a diffusion model. Optionally, the diffusion model is an image-to-text diffusion model.

Optionally, the training process comprises inputting fine-tuning data as the training data into the diffusion model, the fine-tuning data comprising image-concept pairs, each image-concept pair comprising a fine-tuning image and an associated concept comprising a text description related to the visual content of the image.

Optionally, determining the changes in internal representations of the diffusion model during the training process comprises, at the same time as performing the training process: inputting prompt concepts into the diffusion model configured to cause the diffusion model to generate output generated images; and determining the changes in internal representations of the prompt concepts.

Optionally, the internal representation comprises a vector representation of the prompt concept in a cross-attention layer of the diffusion model.

Optionally, the internal representation comprises the value tensor of the cross-attention layer.

Optionally, the data attribution table comprises a data structure associating, for each output generated image generated by the prompt concept, an attribution score providing a numerical quantification of the contribution of each fine-tuning image to the output generated image, wherein the attribution score is based on the determined changes in the internal representation of the prompt concept.

Optionally, the rows of the data attribution table relate to the fine-tuning images, and the columns of the data attribution table relate to the output generated images.

Optionally, the data attribution table is such that the fine-tuning images are ordered and grouped by the concept taken from the associated concept of the particular image-concept pair, and wherein the output generated images are ordered and grouped by the prompt concept.

Optionally, the training the attribution model further comprises: inputting, into the data attribution model, image pairs from the data attribution table, the image pairs comprising a fine-tuning image and an output generated image, and for each image pair; creating, in an image embedding space, a fine-tuning image embedding of the fine-tuning image; creating, in the image embedding space, an output generated image embedding of the output generated image; performing a comparison of the fine-tuning image embedding to the output generated image embedding; and determining, based on the comparison, a predicted attribution score providing a predicted numerical quantification of the contribution of the fine-tuning image to the output generated image.

Optionally, the training further comprises: comparing the predicted attribution score to the attribution score from the data attribution table associated with the image pair; and adjusting, based on the comparison, a network weight of the attribution model.

Optionally, further comprising training the attribution model to distinguish between conceptually similar and conceptually distinct pairs of image pairs, comprising for a pair of image pairs: determining a first predicted attribution score for a first image pair, the first image pair being a positive image pair comprising a fine-tuning image and an output generated image which are conceptually similar; and determining a second predicted attribution score for a second image pair, the second image pair being a negative image pair comprising a fine-tuning image and an output generated image which are conceptually different.

Optionally, further comprising, for all pairs of image pairs in the data attribution table: adjusting network weights of the attribution model based on minimizing a loss function, the loss function being:

$$= L_1 (P_{ap}, GT_{ap}) + L_1 (P_{np}, GT_{np}) + \frac{1}{B} \sum_{i=1}^{B} max(P_{npi} + m_i - P_{api}, 0)$$

where:

$L_1$ is the $L_1$ loss function, the mean absolute error;
$P_{ap}$ is the predicted attribution score of the positive image pair;
$P_{np}$ is the predicted attribution score of the negative image pair;
$GT_{ap}$ is the attribution score from the data attribution table of the positive image pair;
$GT_{np}$ is the attribution score from the data attribution table of the negative image pair;
B is the number of fine-tuning images in the data attribution table;
$P_{npi}$ is the *ith* entry of $P_{ap}$
$P_{api}$ is the *ith* entry of $P_{np}$
$m_i$ is the margin derived from the difference between the attribution score of the positive image pair and the attribution score of the negative image pair $m_i = GT_{api} - GT_{npi}$

Optionally, the attribution model comprises a Siamese network.

Optionally, proximity in the image embedding space corresponds to conceptual similarity.

Optionally, the predicted attribution is determined based on the shifted cosine similarity between the fine-tune image embeddings and the output generated image embeddings in the image embedding space.

According to an aspect, there is provided a computer implemented method of performing data attribution using an attribution model trained in accordance with any manner described herein, comprising: selecting a generated output as generated by the generative AI model of as described anywhere herein; inputting the generated output into the data attribution model; and outputting, from the data attribution model, a data attribution score relating to at least one training input on which the generative AI model was trained, the data attribution score providing a numerical quantification of the contribution of the at least one training input to the generated output.

According to an aspect there is provided a computer program which, when run on a computer, causes the computer to carry out a method in accordance with any manner described herein.

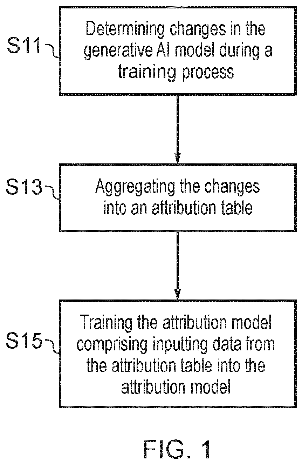

**Figure 1** is a diagram illustrating a training process according to an aspect. In particular, the training process may be a computer-implemented method of training a machine learning attribution model configured to provide data attribution to output generations of generative AI model.

Step S11 comprises determining changes in the generative AI model during a training process.

Step S13 comprises aggregating the changes into an attribution table.

Step S15 comprises training the attribution model comprising inputting data from the attribution table into the attribution model.

Advantageously, aspects of the present application have determined that accessing and monitoring the training stage of a generative AI model can provide crucial insight into how the training data and training process of the specific generative AI model shapes the generated outputs, and hence can be leveraged to provide accurate insights into data attribution of final output generations of the generative AI model.

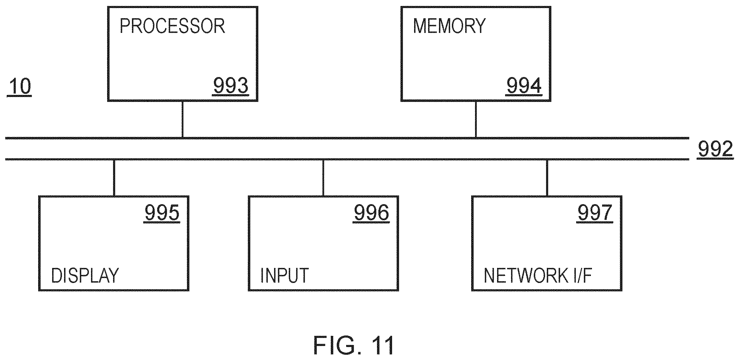

Any of the steps of **Figure 1** may be performed by an apparatus as described with reference to **Figure 11** below.

In particular, in a specific embodiment of step S11, determining the changes comprises monitoring the changes in internal representations (i.e. vectors, embeddings and/or encodings etc.) of the generative AI model whilst the training data is input and processed by the generative AI model during training. For instance, depending on the particular generative AI model in question, the specific weights and biases of the model being monitored may differ, however the principle of monitoring the internal representations during training remains the same. In other words, the changes during training are quantified through the internal representations of the monitored generative AI model, and the changes therein. In a further specific embodiment, determining the changes in internal representations of the generative AI model during the training process comprises, at the same time as performing the training process: inputting prompt concepts into the generative AI model configured to cause the generative AI model to generate output generations; and determining the changes in internal representations of the prompt concepts.

In specific embodiments, the training process may be a fine-tuning process, where the generative AI model is a base model and the fine-tuning process comprises inputting customisation training data, which may be private data, public data related to a specific fine-tuning domain or purpose etc., or any combination of these. Advantageously, with respect to the labour-intensive base-model training stage, monitoring training during the fine-tuning stage requires fewer resources, can be efficiently performed, and advantageously allows access to the training stage to become practically feasible. Further, leveraging such access may advantageously improve the accuracy of data attribution given that the training stage holds valuable information which can be advantageously harnessed, such as allowing crucial insight into how the training images shape the generated outputs.

In specific embodiments, the generative AI model may be a particular kind of model. For instance, the generative AI model may be a large language model, a generative adversarial network, a neural radiance field, Variational Autoencoders, Autoregressive Models, Recurrent Neural Networks, Transformer-based Models, or any other suitable model. In a specific embodiment, the generative AI model is a diffusion model, and in a particular embodiment may be an image-to-text diffusion model.

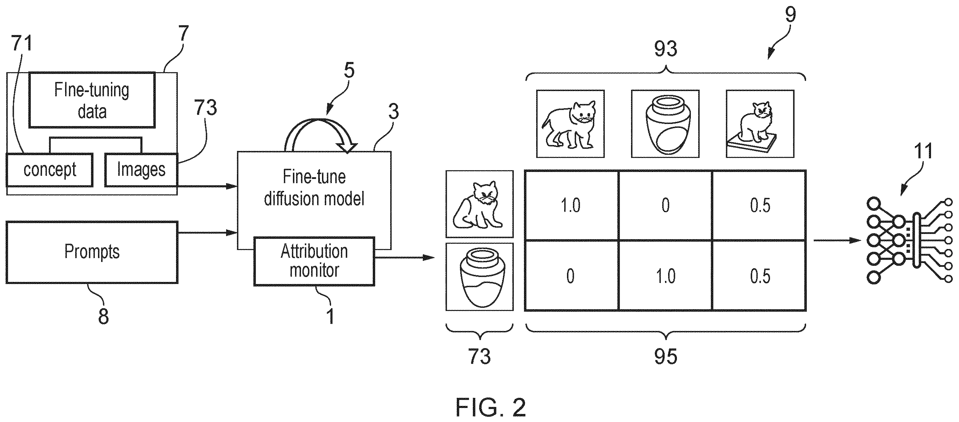

**Figure 2** is a diagram illustrating a process according to an embodiment, where the process is a specific embodiment in accordance with the process of **Figure 1.** In particular, in a specific embodiment as shown in **Figure 1,** the training process is a fine-tuning process, the generative AI model is a diffusion model, and the diffusion model is a text-to-image model.

Hence, in accordance with the specific embodiment of step S11, changes in a diffusion model 3 during a fine-tuning process may be determined. For instance, the determining of the changes may be performed by an attribution monitor 1, which may monitor the diffusion model 3 during the fine-tuning process 5. The fine-tuning process 5 may be an iterative fine-tuning process. When the fine-tuning process 5 is iterative, the attribution monitor 1 may perform monitoring of the changes throughout the iterative fine-tuning process 5. The diffusion model 3 may be a base model (i.e. a foundation model), or may be a diffusion model 3 which has already been fine-tuned but is now being subject to a further, additional, or different fine-tuning process. To perform the fine-tuning process 5, fine-tuning (i.e. customisation) training data is input into the diffusion model 3. The diffusion model 3 may be any suitable or appropriate diffusion model, and in particular is a text-to-image diffusion model. The fine-tuning data 7 may be from any suitable or appropriate source, and may for instance be publicly available or private, or a combination of these. When the diffusion model 3 is a text-to-image diffusion model, fine-tuning data 7 may comprise image-concept pairs, each image-concept pair comprising an image 73 and an associated at least one concept 71 comprising text providing a description of and/or related to the visual content of the associated image 73. Accordingly, the fine-tuning process 5 may comprise inputting fine-tuning data 7 as the training data into the diffusion model 3, the fine-tuning data 7 comprising image-concept pairs 71, 73, each image-concept pair 71, 73 comprising an image 73 and an associated concept 71 comprising a text description related to the visual content of the image.

In inputting the fine-tuning data 7 into the diffusion model 3, the diffusion model 3 will process the fine-tuning data and in so doing the fine-tuning data 7 will change the diffusion model 3. For instance weights and biases in the diffusion model 3 may change and be determined, and internal latent representations (such as vector representations) of the fine-tuning data 7 may change and be determined throughout the training. These changes may be monitored by the attribution monitor 1. Typically, during training, no output generations of the diffusion model are generated as they would be during an inference stage. Instead, the focus during training is on learning to denoise images at various stages of the diffusion process given the text prompt 71. Aspects of the present application have advantageously determined the changes internal to the diffusion model 3, for instance in the internal representations generated within the diffusion model 3 during fine-tuning 5, may be monitored and information representing the change(s) may be able to be harnessed to assist and improve data attribution in the final use of the diffusion model 3 post-training to generated output images based on prompts.

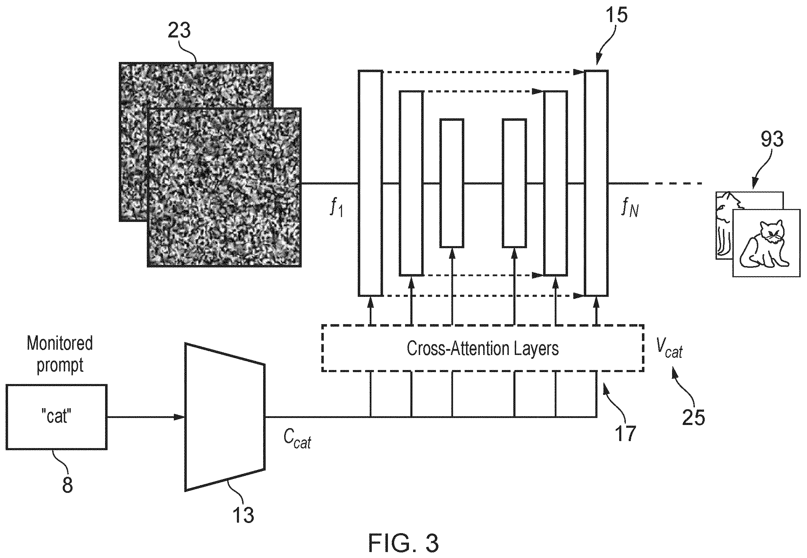

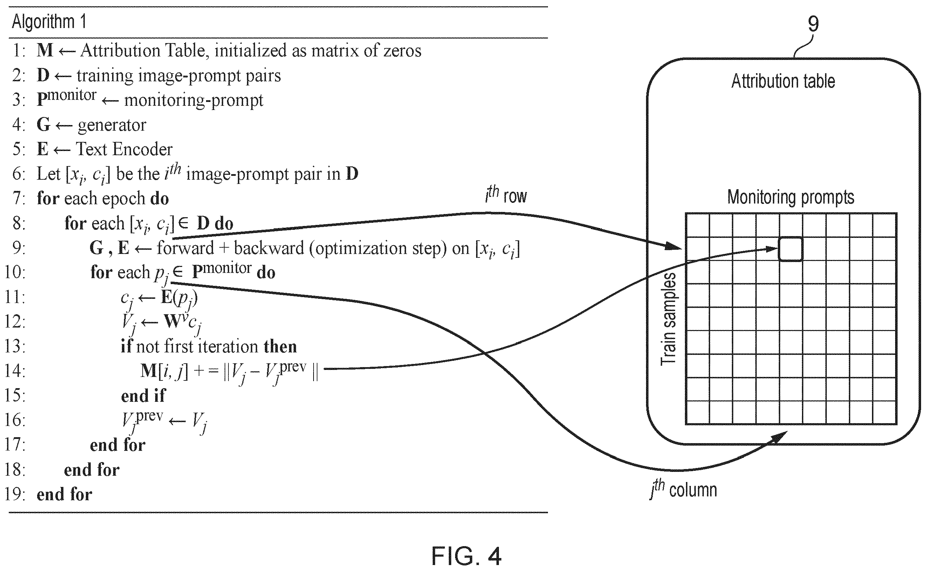

As will be explained further below with reference to **Figure 3** and **Figure 4,** in specific embodiments of the present application a collection of prompt concepts 8 are determined which are to be used to input into the diffusion model 3 to cause the diffusion model 3 to generate output images. In particular, these prompt concepts 8 are inputted and processed by the diffusion model 3, during the fine-tuning process 5, simultaneously with the diffusion model 5 training on and learning the fine-tuning data 7. Hence these prompt concepts 8 are passed through the diffusion model 3 whilst it is changing on the basis of the fine-tuning data 7. These prompt concepts 8 may be the same as, similar to, or different from the concepts 71 of the fine-tuning data set 7. Accordingly, in a specific embodiment, determining the changes in internal representations of the generative AI model during the training process comprises, at the same time as performing the training process: inputting prompt concepts into the generative AI model configured to cause the generative AI model to generate output generations; and determining the changes in internal representations of the prompt concepts. In a further specific embodiment, determining the changes in internal representations of the diffusion model 3 during the training process 5 comprises, at the same time as performing the training process 5, inputting prompt concepts 8 into the diffusion model 3 configured to cause the diffusion model 3 to generate output generated images 93 and monitoring the changes in internal representations of the prompt concepts.

In accordance with step S13, the changes may be aggregated into an attribution table 9. For instance, the changes as determined in accordance with step S11 may be processed and numerically quantified in some manner, and this information may be collected and aggregated into an attribution table 9.

In particular, the attribution table 9 is an abstract data structure created based on the step S11 of determining the changes in the model during training, wherein the depiction in Figure 2 is a visual representation of the data structure for ease of visual understanding.

The attribution table 9 may be structured to associate output generated images 93, images generated by the diffusion model 3 as a result of the particular prompt concepts 8, with the images 73 from the fine-tuning data 7. In particular, as will be described further below in reference to **Figure 3** and **Figure 4,** a numerical quantification of the influence or contribution of each specific fine-tuning image 73 to each specific output generated image 73 may be determined and this information may be stored in the attribution table 9 as an attribution score 95. For instance, the rows of the attribution table 9 may relate to each of the fine-tuning images 73 and the columns of the table may relate to each output generated image 93 as generated in response to specific prompt concepts 8, and the cells of the table may relate to the attribution score in reference to the fine-tuning image 73 and the output generated image 93 of that particular row and column. Accordingly, in a specific embodiment, the data attribution table 9 comprises a data structure associating, for each output generated image 91 generated by a prompt concept 8, a data attribution score 95 providing a numerical quantification of the contribution of each image 73 from the fine-tuning data to the output generated image 93, wherein the data attribution score 95 is based on the determined changes in the internal representation of the prompt concept 8.

In a certain embodiments, as will be described further below, in the attribution table 9 the order of the fine-tuning images 73 may be grouped by concept, such as the same or similar concept, such that fine-tuning images 73 with the same associated concept 71 are adjacent to each other in blocks. Similarly the order of the output generated images 93 may be arranged to be in the same order as the fine-tuning images 73, in otherwords such that the order of the concept groupings of the fine-tuning images 73 as based on the concepts 71 is the same as the order of the concept groupings of the output generated images 93 as based on the concepts of the prompt concepts 8. For instance, if the first group (i.e. first five rows) of the fine-tuning images 73 have the same associated concept of 'cat', the first group (i.e. first five columns) of the output generated images 93 may have the same (or similar) associated concept 'cat' from the prompt concepts 8. Note the number of fine-tuning images 73 in the concept group need not be the same as the number of output generated images 93 in the associated concept group. Accordingly, in a specific embodiment, the fine-tuning images 73 are the rows of the attribution table 9, for instance each row relates to a specific fine-tuning image 73, and the output generated images 93 are the columns of the attribution table 9, for instance each column corresponds to a specific output generated image 93. The data attribution table 9 may associated each output generated image 93 with the prompt concept 8 that caused it.

Accordingly, in a further specific embodiment the data attribution table 9 is such that the fine-tuning images 73 are ordered and grouped by the concept 71 taken from the associated concept of the particular image-concept pair, and wherein the output generated images 93 are ordered and grouped by the prompt concept 8. In a specific embodiment, the order of the fine-tuning images 73 by concept may be the same or similar to the order output generated images 93, i.e. the order or concepts of both the fine-tuning images 73 in the rows and the output generated images 93 in the columns may be the same.

For visual ease, the attribution table 9 of **Figure 2** depicts only two fine-tuning images 73 and two output generated images 93, however the table may take any number of either of these.

In accordance with step S15, the attribution model 11 is trained, comprising inputting data from the attribution table 9 into the attribution model 11. This process will be described further below. The attribution model 11 may be any suitable machine learning model, such as a neural network. The attribution model 11 will be described further below.

**Figure 3** concerns a specific embodiment of the diffusion model 3 as depicted in **Figure 2,** wherein the diffusion model 3 is a text-to-image diffusion model. Accordingly, **Figure 3** depicts a schematic of a common text-to-image architecture. In a specific embodiment in accordance with step S11, the determining of the changes in the diffusion model 3 during the fine-tuning process 5 may relate to changes of aspects of a text-to-image diffusion model in accordance with **Figure 3.**

In particular, the text-to-image diffusion model 3 comprises a text encoder 13, de-noising layers 15 (for instance a conditional denoising U-Net), and a cross-attention layer 17. For visual clarity, only pertinent parts of the text-to-image diffusion model 3 are depicted, however the text-to-image diffusion model 3 may include other suitable or appropriate aspects, such as for instance a variational autoencoder etc. In this specific embodiment, aspects of the present application have advantageously identified that changes in the diffusion model 3 during the fine-tuning process 5 may be accurately determined by monitoring internal representations of the diffusion model 3 during the fine-tuning training process 5, and in particular by monitoring the activations of the attention layers. In particular, this offers distinct advantages in computational efficiency, reduced calculations, and speed of process by offering insights into the fine-tuning training process whilst maintaining efficiency through avoiding the full generation pipeline overhead. In the specific embodiment the determining of the changes in accordance with step S11 advantageously focuses on the efficient use of the of the cross-attention layer 17 representation for providing insights into data attribution.

In particular, the prompt concepts 8 may be referred to as monitored prompts, as these are the prompts which are going to be monitored - and the changes in their internal representations - during the fine-tuning process 5 as fine-tuning images 73 are input into the diffusion model 3. These prompt concepts 8 are pre-determined, and may be exactly the same or similar to the concepts 71 associated with the fine-tuning images 73.

In particular, for the example prompt concept 8 "cat", this is input into the text encoder 13 which creates text embedding Ccat. The prompt concept 8 may have an associated noisy input image 23 thereby forming a noise-prompt input pair. This text-embedding Ccat controls generation of the output generated image 93 from the noisy input image 23 (i.e. a Gaussian noise input). The cross-attention layer 17 comprises a value tensor V which is a crucial vector that holds the information from the text embeddings, wherein this value tensor V is combined with the image feature maps based on the weights in the cross-attention later 17, thereby ensuring that the output generated image 93 reflects the content and style described in the text prompt concept 8. In other words, the value tensor V represents information on the input prompt concept 8, upon which the generative model 3 conditions its output generated image 93. Accordingly, each prompt concept 8 is mapped by the cross-attention layer to a distinct value tensor V, 25.

Determining the changes in the diffusion model 3 during a fine-tuning process 5 by focussing on the changes in the value tensor V of the cross-attention layer 17 is particularly advantageous for a number of reasons. First, it contains analytically valuable information and is efficient to monitor. Second, monitoring V 25 does not require full generations, and is constant along the reverse-diffusion, saving ample computation time. Third, V is an informative representation of the output generation image 93, which encapsulates the text embedding and directly connects to the text embedding which controls the generation. Fourth, the objective of concept customization fine-tuning is to generate diverse outputs that maintain semantic consistency with the fine-tune customization concept 71, and monitoring V 25 encapsulates this assumption as the resulting attributions become consistent for output generated images 93 from the same prompt concept 8. Fifth, V 25 is readily scaled (inner parts of $V$ 25 have the same scale - it is multiplied by a probability vector hence having a consistent scale), making it particularly suitable for monitoring and quantifying and aggregating changes.

Accordingly, in a specific embodiment of step S11, how V 25 changes for each input prompt concept 8 throughout the fine-tuning training process 5 is monitored, and changes in V 25 may then be aggregated into the attribution table 9 in a specific embodiment of step S13. Accordingly, in a specific embodiment, the monitored changes in internal representations in the diffusion model comprises monitoring the changes in a vector representation of the prompt concept in a cross-attention layer of the diffusion model, where for instance the vector representation may be the value tensor of the cross-attention layer. This is done simultaneously during the fine-tuning process as the diffusion model 3 is being trained on and learning on the fine-tuning dataset 7. In particular, such specific embodiments are advantageous as it is possible to simultaneously perform the fine-tuning process 5 and to pass prompt concepts 8 through the diffusion model 3 such that it generates output generated images 93. Further still, this simultaneous processing is advantageous as it allows parallelization and thereby processing efficiencies, in particular because the determining and monitoring of the changes in the diffusion model3, such as in the changes of the cross-attention layer 17, does not interfere with the fine-tuning training process 5 of the diffusion model 3 - where the fine-tuning data 7 is passing through the diffusion model 3 and the diffusion model 3 is changing accordingly. Accordingly, as the value tensor V 25 of the cross-attention layer 17 is constantly being changed by each new piece of fine-tuning data 7 that is entering and training the diffusion model 3, it is possible to determine and quantify these changes by monitoring the changes in the value tensor V 25 representation of the prompt concepts 8 which are being processed by the cross-attention layer 17 as you perform the fine-tuning process 5.

Further, this simultaneous inputting of prompt concepts 8 and determining of the changes in the representations of the cross-attention layer throughout the fine-tuning training 5 process allows the changes as determined at each incremental stage to be related to the fine-tuning image 71 which has just been input into the diffusion model 3 and which has thereby caused those changes. In other words, repeatedly inputting prompt concepts 8 and monitoring the changes in the internal representations of the prompt concepts 8 in the value tensor V25 of the cross-attention layer 17, whilst simultaneously performing the fine-tuning process 5 by inputting fine-tuning images 73 into the diffusion model 3 allows the determined change in the value tensor $V$ 25 to be associated with the fine-tuning image 71 that has caused it, or the batch of tine-tuning images 71 which have caused it. Accordingly, this allows the determined changes to be aggregated into the attribution table 9 with reference to particular output generated images 93, their associated prompt concepts 8 which caused them, and each fine-tuning image 73 which contributed to the generated image 93, where the attribution score 95 is thereby related to the determined changed and a numerical quantification thereof.

It is noted that the fine-tuning process 5 may involve iteratively passing all the fine-tuning images 73 through the diffusion model 3, any number of times, and in any order, as long as the current batch of fine-tuning images 71 which the diffusion model 3 is training on is tracked such that the associated changes in the value tensor V25 of the cross-attention layer as caused by that batch of fine-tuning images 71 can be attributed to them accordingly. Similarly, it does not matter what order the prompt concepts 8 are input into the diffusion model 3, and they may be input simultaneously for processing efficiency and parallelization advantages as they do not affect each other.

In a specific embodiment of step S11, as previously mentioned, the prompt concepts 8 condition the generation via the cross-attention layer 17. The input prompt 19 is encoded into a token embedding C, which is integrated into the generation via cross-attention layers 17. As is known (for instance from: Rombach, R., Blattmann, A., Lorenz, D., Esser, P., Ommer, B.: High-resolution image synthesis with latent diffusion models. In: Proceedings of the IEEE/CVF conference on computer vision and pattern recognition. pp. 10684-10695 (2022)) in a general formulation, let $W_K$, $W_V \in \theta$ tunable matrices, and projections into K = $W_K c$ and $V = W_V c$ are employed, and combined with query matrices Q, which represent image features at a current diffusion step, bridging text and image modalities as **Equation 1:**

$$\text{Cross-Attention} := \text{softmax}\left(\frac{QK^T}{\sqrt{m}}\right)V.$$

This expresses a weighted average of prompt information (V).

Hence, in aspects of the present application with reference to the specific embodiment of **Figure 3** and with reference to the cross-attention layer 17, operation consists of $Q_i = W^q f_i$, $K = W^k c$, $V = W^v c$, and a weighted sum over value features as **Equation 2:**

$$\text{Attention}(Q_i, K, V) = \text{Softmax}\left(\frac{Q_i K^T}{\sqrt{d'}}\right)V.$$

Wherein $W^{q,k,v}$ are the trainable tensors of the cross-attention layer 17.

Hence aspects of the present application have advantageously identified the monitoring and analysis of these cross-attention equations, in particular determining and aggregating the changes in $V$ 25 throughout a fine-tuning process 5, as being advantageously useful for data attribution.

In particular, in a specific embodiment, before performing the fine-tuning process 5 on D - the clean fine-tuning images 71 from fine-tuning dataset 7 - the predefined set of prompt concepts 8 is reserved for monitoring their evolution throughout the fine-tuning process 5. This pre-defined set of monitoring prompts ($\boldsymbol{P}^{monitor}$) form the prompt concepts 8.

Each prompt concept 8 comprises a noise-prompt input pair $z_T^j = (\hat{n}_j, p_j)$. Let $\boldsymbol{P}^{monitor}$ be the set of monitoring prompts, *i.e.* $p_j \in \boldsymbol{P}^{monitor}$. A fine-tuning process 5 is then performed on the diffusion model 3, and the predefined prompt concepts 8 are monitored. On every iteration, each prompt concept 8 is encoded into the vector (tensor) representation, $V^{monitor,j}$ and fed into the diffusion model 3. The updates in $V^{monitor,j}$ reflect the changes associated with the incoming batch of fine-tuning images 73 (i.e. clean-image dataset D). In this specific embodiment, these changes are then recorded in the data attribution table 9 in a specific embodiment of step S13. In particular, the data attribution table 9, $\boldsymbol{M}$, is created wherein it is organized with columns representing output generated images 93 and rows representing fine-tuning images 73. In this way, the elements of the data attribution table 9, $\boldsymbol{M}$, are cumulatively updated by tracking changes in $V^{monitor,j}$ over the course of fine-tuning process 5, as follows as **Equation 3:**

$$\mathbf{M}^{iter+1}[i,j] = \mathbf{M}^{iter}[i,j] + \Delta^{iter} V^{monitor,j}, \quad \forall i \in \text{Batch}^{iter}$$

where $M^{iter}$, $Batch^{iter}$, $\Delta^{iter}$ are $\boldsymbol{M}$, the current batch of fine-tuning images 73, and the change in $V^{monitor,j}$ at iteration *iter* respectively. In a specific embodiment, $\Delta^{iter}V$ was chosen to be:= $\| V^{iter+1} - V^{iter} \|_1$.

Hence in the above specific embodiments, the monitoring and analysis of these cross-attention equations, in particular determining and aggregating the changes in the value tensor V 25 of the cross-attention layer has been identified as advantageous, where V is as described in **Equation 1** above, and where $V = W^v c$, and where the superscript "monitor, j" and/or "iter" serves to express the change(s) in V throughout training iterations j=1, 2, etc.

**Figure 4** shows a detailed pseudo-code - denoted as Algorithm 1 - of the specific embodiments described above in relation to **Figure 3,** and which thereby defines monitoring the fine-tuning process 5 of the diffusion model 3, and in particular monitoring the changes in the value tensor V of the cross-attention layer 17, throughout the fine-tuning process 5 and aggregating the changes into the attribution table 9. For illustration purposes, **Figure 4** shows the $i^{th}$ row and the $j^{th}$ column of the attribution table 9 being processed, wherein the attribution table 9 is structured by the prompt concepts 8 (monitoring prompts) as the input prompts n along the top x-axis (columns), and the fine-tuning images 73 (train samples) as the fine-tuning data 7 along the y-axis (rows). Accordingly, the Algorithm 1 as depicted in **Figure 4** represents a specific embodiment of steps S11 and S13. For completeness, Algorithm 1 is included here below:

---

**Algorithm 1** Monitoring Training for the Attribution Table

---

1: $\mathbf{M} \leftarrow$ Attribution Table, initialized as matrix of zeros
2: $\mathbf{D} \leftarrow$ training image-prompt pairs
3: $\mathbf{P}^{\mathrm{monitor}} \leftarrow$ monitoring prompt
4: $\mathbf{G} \leftarrow$ generator
5: $\mathbf{E} \leftarrow$ Text Encoder
6: Let $[x_i, c_i]$ be the $i^{th}$ image-prompt pair in $\mathbf{D}$
7: **for** each epoch **do**
8:     **for** each $[x_i, c_i] \in \mathbf{D}$ **do**
9:       $\mathbf{G}, \mathbf{E} \leftarrow$ forward $+$ backward (optimization step) on $[x_i, c_i]$
10:       **for** each $p_j \in \mathbf{P}^{\mathrm{monitor}}$ **do**
11:         $c_j \leftarrow \mathbf{E}(p_j)$
12:         $V_j \leftarrow \mathbf{W}^v c_j$
13:         **if** not first iteration **then**
14:           $\mathbf{M}[i,j]{+}{=} \|V_j - V_j^{\mathrm{prev}}\|$
15:         **end if**
16:         $V_j^{\mathrm{prev}} \leftarrow V_j$
17:       **end for**
18:     **end for**
19: **end for**

---

Further, this process can be repeated iteratively a number of times, for instance repeatedly inputting batches of the fine-tuning data 7, where a batch represents all or subsets of the fine-tuning images 73 in the fine-tuning data 7. Advantageously, aspects of the present application can accurately handle fine-tuning data 7 batches of any size, in particular through iterative processing. For instance, for batches of one, the changes in internal representations are correctly attributed to the sole fine-tuning image 73 training sample. However, whilst larger batches maintain correct attributions as well, they may also experience additional noisy attributions. However, advantageously, the noisy attributions are averaged out over epochs, allowing accurate attributions to prevail in larger batch sizes as well. For instance, following **Equation 3,** on iteration *iter,* the attribution table 9 entries *M[i, j]* for every i in the batch, and every j, irrespective of their relevance to i. For instance, if *i1* and *i2* represent different concepts A and B, and j is associated with concept A (i.e. from the associated prompt concept 8), both i1 and i2 receive updates from $\Delta^{iter}V^{j,monitor}$. Nonetheless, the correct attributions (*j→i1*) are consistently applied, while incorrect attributions (*j→i2*) become negligible over time due to random distribution across batches and the averaging effect throughout fine-tuning training process 5. Hence while smaller fine-tuning data 7 batches attain high performance earlier, advantageously with increased epochs the recall becomes the same for all batch sizes.

Accordingly, in embodiments of the present application - such as the specific embodiments depicted in **Figure 3** and **Figure 4** and described above - changes in V throughout the fine-tuning process 5 may be determined and monitored, and the changes may be aggregated into the attribution table 9. In particular, a data attribution score 95 may be provided which is a numerical quantification of the contribution of each fine-tuning image 73 to the output generated image 93, wherein the data attribution score 95 is based on the determined changes in the internal representation of the prompt concept 8.

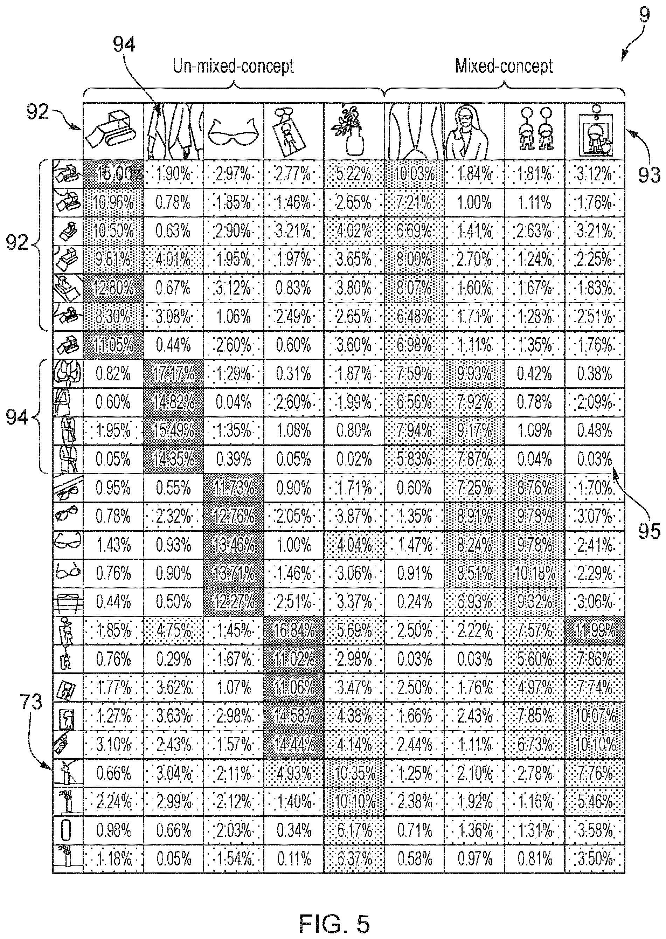

**Figure 5** depicts an example of a data attribution table 9 created in accordance with any previously described manner. In particular, data attribution tables 9 in accordance with the present application may taken any size, as determined by the number of fine-tuning images 73 and output generated images 93 determined by prompt concepts 8. As previously mentioned, the order of the fine-tuning images 73 may be grouped by concept, such as the same or similar concept, such that fine-tuning images 73 with the same associated concept 71 are adjacent to each other in blocks. For instance, a first concept group 96 (for instance 'trains') is depicted, and subsequently a second concept group 94 ('suit') is depicted below. Similarly the order of the output generated images 93 may be arranged to be in the same order as the fine-tuning images 73, in other words such that the order of the concept groupings of the fine-tuning images 73 as based on the concepts 71 is the same as the order of the concept groupings of the output generated images 93 as based on the concepts of the prompt concepts 8. Note the number of fine-tuning images 73 in the concept group need not be the same as the number of output generated images 93 in the associated concept group, as shown in **Figure 5.**

Further, in accordance with any other described aspect or embodiment, the output generated images 93 of the data attribution table 9 may be formed by input prompt concepts 8 that relate to single concepts, such as 'cat', or mixed-concepts such as 'a dancing cat'. This is indicated along the top of the output generated images 93. Indeed, as will be described further below, embodiments of the present application advantageously allow for improved accuracy data attribution in both between-concept, and within-concept scenarios, and this advantageous functionality is facilitated in part by the structure of the data attribution table 9 as described herein, allowing for both concept group ordering and mixed and single concept ordering.

**In Figure 5** the data attribution scores 95 are indicated as percentages. However, this is only a representative example. Further, the data attribution scores 95 are shown in different magnitudes of hatching density depictions, with higher data attribution scores 95 shown in higher density hatching (i.e. darker). As can be seen in **Figure 5,** an outcome of the concept grouping of both the fine-tuning images 73 and the output generated images 93 in the same order is that the data attribution scores 95 line up as highest along diagonals lines.

In specific embodiments, the data attribution scores 95 are generated by assigning a real-value score to each to the fine-tuning images 71 which indicates the importance of each fine-tuning image 73 to the output image generation 93. After the fine-tuning process 5 is completed, the attribution scores 95 are unnormalized. Accordingly, the data attribution scores 95 may be normalised, including the columns of the attribution table 9 being divided by the sums of the attribution scores 95 to provide valid probabilities.

In accordance with any of the embodiments described above, in step S13 the changes in the diffusion model 3 are aggregated into an attribution table 9. In step S15, the attribution model 11 is trained, comprising inputting data from the attribution table 9 into the attribution model 11, for instance using data from the attribution table 9 for the (target) labels/annotations.

In particular, in embodiments of step S15 it is considered that that the attribution table 9 as created in accordance with any described embodiment will at this stage accurately represent the diffusion model's 3 manner of data attribution for the pre-set monitored prompt concepts 8. In embodiments of step S15, this stage advantageously allows for the attribution model 11 to be able to generalise the diffusion model's 3 manner of data attribution to as yet unseen prompts, for instance where the input prompts are not the pre-set monitored prompt concepts 8.

The attribution model 11 may be any appropriate machine learning model, such as a neural network. In a specific embodiment of step S15, the attribution model 11 is a Siamese (i.e. twin) neural network. In particular, a Siamese network may use the same weights while working in tandem on two different input vectors to compute comparable output vectors, and for instance one of the output vectors may be a precomputed baseline against which other vectors can be compared. In particular, the attribution model 11 may be configured to generate and learn an image embedding space in which the similarity between generated output images and fine-tuning training images in terms of proximity in the image embedding space corresponds to the attribution. In other words, attributions may be determined via the similarity of image embeddings in the image embedding space, where images with the same concepts are embedded closer together in the image attribution space. Hence in specific embodiments proximity in the image embedding space corresponds to conceptual similarity.

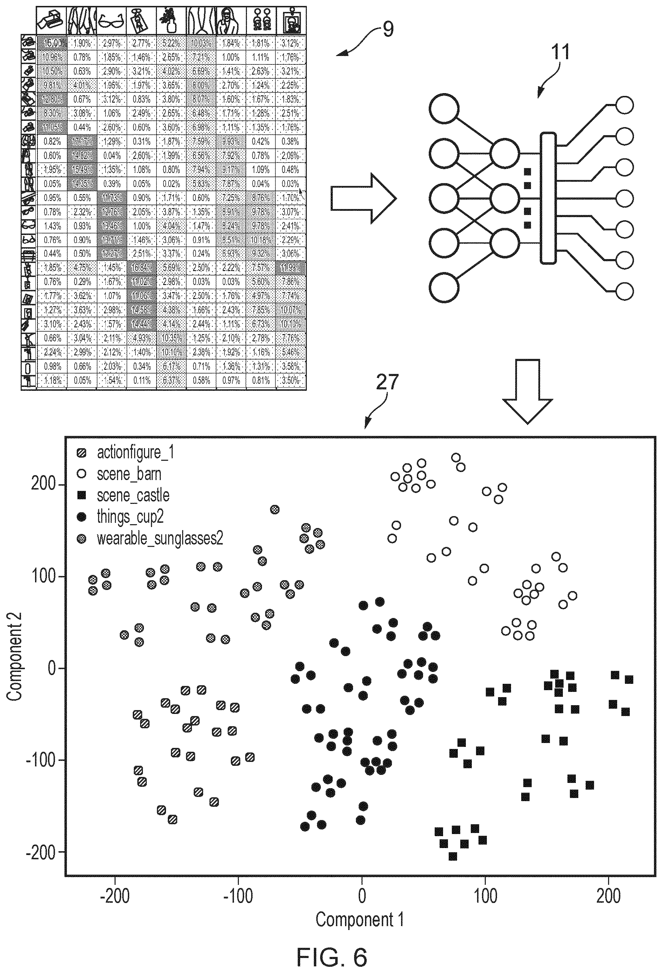

For instance, **Figure 6** shows a specific embodiment of a process in accordance with step S15 in which the attribution model 11 is trained by inputting data from the attribution table 9, and wherein the attribution model 11 generates an image embedding space 27. It is noted that embedding space 27 in **Figure** 6 contains example data representations which are merely for visual understanding, where concepts are depicted in different opacity hatchings as indicated.

Accordingly, using this image embedding space 27, in a specific embodiment the aim of the attribution model 11 is to predict an attribution score for each image pair of fine-tuning image 73 and output generated image 93 in the data attribution table 9, and by comparing these predictions to the ground truth of the actual data attribution score 95 as provided in the table, to learn from these predictions. In particular, the attribution model 11 is aiming to learn the attribution table 9 in the sense of being able to accurately recreate (approximately if not exactly) the attribution scores 95 in the attribution table 9 for any combination of fine-tuning image 73 and output generated image 93. The attribution model 11 learns this information by altering its internal representations and network weights of its image embedding space 27, such that the image embedding space 27 is (sufficiently) accurately configured such that it can be reliably and accurately used for predicting data attributions between fine-tuning image data 73 and new output generated imaged created by new unseen input prompts.

Accordingly, in a specific embodiment the training the attribution model 11 further comprises inputting, into the data attribution model 11, images pairs from the data attribution table 9, the image pairs comprising a fine-tuning image 73 and an output generated image 93, and for each image pair; creating, in an image embedding space 27, a fine-tuning image embedding of the fine-tuning image 73; creating, in the image embedding space 27, an output generated image embedding of the output generated image 93; performing a comparison of the fine-tuning image embedding to the output generated image embedding; and determining, based on the comparison, a predicted data attribution score providing a numerical quantification of the contribution of the fine-tuning image 73 to the output generated image 93. Further, in a specific embodiment, the training further comprises: comparing the predicted data attribution score to the data attribution score 95 from the data attribution table 9 associated with the image pair; and adjusting, based on the comparison, a network weight of the attribution model 11. The comparison may be based on determining whether a loss function is at a minimum.

In a specific embodiment, the attribution model 11 may be configured to learn the image embedding space 27 using a distance metric learning (DML) process (for instance as described in: Wang, S.Y., Efros, A.A., Zhu, J.Y., Zhang, R.: Evaluating data attribution for text-to-image models. In Proceedings of the IEEE/CVF International Conference on Computer Vision, pp. 7192-7203. 2023, which has advantageously been identified as particularly effective at learning image embeddings in scenarios similar to the present novel application. As noted above, in this image embedding space 27 images with the same concepts are embedded closer together in the image attribution space 27, and attributions may be determined via the similarity of image embeddings in the image embedding space 27. In particular, in a specific embodiment the attribution model 11 is in the form of the Siamese network and is trained to distinguish between conceptually similar (positive) and distinct (negative) pairs of output generation images and fine-tuning customisation images.

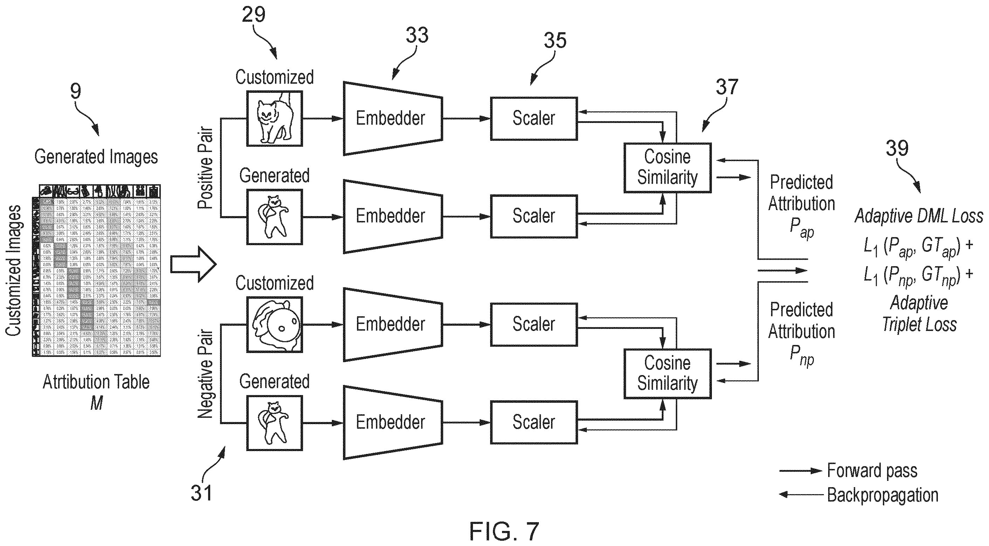

In particular, **Figure** 7 shows a specific embodiment of a DML training of the attribution model 11 comprising a Siamese network. The attribution model 11 is trained using the data from the attribution table 9, in particular using image pairs from the data attribution table 9. In particular, in the specific embodiment of the Siamese network, two image pairs must be processed: a positive image pair 29 and a negative image pair 31, where a positive image 29 comprises a fine-tuning image 73 and an output generated image 93 that are conceptually the same or similar, and the negative image pair 31 comprises a fine-tuning image 73 and an output generated image 93 that are conceptually dissimilar or distinct. It is possible to select the positive image pair 29 and negative image pair 31 in a number of ways. First, as the concepts 71 associated with the fine-tuning images 73 are known and the prompt concepts 8 which generated the output generated images 93 are known, the positive and negative image pair 29, 31 can be selected this way. Alternatively or additionally, the attribution score 95 as taken from the data attribution table 9 - as determined in any previously described manner - can be used to determine the conceptual similarity and hence whether for any particular image-pair it is a positive 29 or negative image pair 31. For visual convenience, **Figure 7** shows only two image pairs, one positive image pair 29 and one negative image pair 31. However, the training is performed across all image pairs in the data attribution table 9.

Accordingly, in a specific embodiment the attribution model is trained to distinguish between conceptually similar and conceptually distinct pairs of image pairs, comprising for a pair of image pairs: determining a first predicted attribution score for a first image pair, the first image pair being a positive image pair comprising a fine-tuning image and an output generated image which are conceptually similar; and determining a second predicted attribution score for a second image pair, the second image pair being a negative image pair comprising a fine-tuning image and an output generated image which are conceptually different.

During trainingas shown in **Figure 7,** in the forward pass, each image pair goes through a two-stage transformation involving initial feature extraction by a pre-trained embedder 33, which feeds a custom scaler layer 35 that is trained for the task, and outputs the final embedding in the image embedding space 27. The predicted attribution scores are then obtained as the shifted cosine similarity 37 between the vector embeddings of the output image generation 93 and the fine-tuning image 73 in that image pair, that is the fine-tuning image embedding and the output generated image embedding in the image embedding space 27. By way of background, whilst the cosine similarity measures the cosine of the angle between two vectors in a multidimensional space, sometimes the data might have biases or offsets that could affect the cosine similarity measurement -in such cases the shifted cosine similarity may be used to adjust for biases by for instance cantering or shifting the data before calculating similarity. In particular the present instance, in a specific embodiment, the shifted cosine similarity is used for altering the function output to be between $[0,1]$ (in contrast to the original output, which is between $[-1,1]$), and this is done by normalization. Hence here the functionality of the shifted cosine similarity is applied to align with the ground truth ground truth similarity values of the actual data attribution score 95, from the attribution table 9, which are between $[0,1]$ to thereby advantageously improve the learning process.

A loss function 39 is then used to measure the loss of the predicted attribution scores against the ground truth attribution scores 95 obtained from the attribution table 9 for that associated image pair. In the backward pass (i.e. backpropagation), the information from the comparison using the loss function 39 is used to adjust the weights and biases of the attribution model 9 accordingly such that the difference between prediction attribution score and ground truth attribution score in the image embedding space 27 is learned from, and minimised. In other words, the loss function 39 is used to iteratively cause ever greater concept grouping in the image embedding space 27 and thereby to train the attribution model 11.

The order in which image pairs are processed by the attribution model 11 does not matter, and may be done randomly. It does not matter whether the positive image-pair 29 and negative image pair 31 are themselves conceptually similar or relate to the same concepts in part.

The embedder 33 may be an image-to-text pre-trained model that takes an image and outputs a vector, the scaler 35 may be a custom neural network layer that performs a linear transformation (scaling and shifting) on its input, and there may optionally be a mapper layer which is a non-linear transformation network for transfer learning, transforming input vectors to output vectors. The embedder 33 may be any suitable Embedder, and in a specific embodiment may for instance be CLIP (Wang, S.Y., Efros, A.A., Zhu, J.Y., Zhang, R.: Evaluating data attribution for text-to-image models. In: Proceedings of the IEEE/CVF International Conference on Computer Vision. pp. 7192-7203(2023)).

The loss function 39 may be any appropriate loss function. In a specific embodiment there is advantageously provided a novel loss function 39 specifically tailored for customised DML models, which is here called the adaptive (DML) loss function. This adaptive loss function 39 is applied in scenarios where distances between samples in the dataset are predetermined, as in the present data attribution scenario, where the attribution model 11 learns the values from the attribution tables 9 (i.e. the distance between two images) and not just to distinguish their concepts. Advantageously, using this adaptive loss function leads to finer granularity in the model predictions. Further, this this adaptive loss function provides enhanced performance relative to the traditional triplet loss function used in Siamese networks, for instance as outlined in: Wang, S.Y., Efros, A.A., Zhu, J.Y., Zhang, R.: Evaluating data attribution for text-to-image models, In: Proceedings of the IEEE/CVF International Conference on Computer Vision. pp. 7192-7203 (2023). In particular, unlike the novel adaptive loss function of the present application, the traditional triplet loss function only ensures that an anchor sample is closer to a positive sample (same class) than to a negative sample (different class) by a fixed margin, where the margin specifies the minimum difference between the anchor-positive distance and the anchor-negative distance for the loss to be zero. Advantageously, the adaptive loss function of the present application integrates the attribution scores 95 from the attribution table 9 into the loss function in the following manner.

In particular, let $(P_{ap}, P_{np})$, $(GT_{ap}, GT_{np})$ be the positive and negative pairs of predicted attributions and ground truth attributions (the attribution scores 95 obtained from the attribution table 9) respectively, and denote $P_{api}$, $P_{npi}$ as the *ith* entries of $P_{ap}$, $P_{np}$ respectively. Let $B$ be the number of pairs in a batch of fine-tuning data 7, i.e. the number of fine-tuning training images 73. To account for the distance between concepts, the present application introduces a new Adaptive Triplet Loss function as **Equation 4:**

$$\text{Adaptive Triplet Loss} := \frac{1}{B}\sum_{i=1}^{B}\max(P_{np_i} + m_i - P_{ap_i}, 0),$$

where $m_i$ is the margin derived from the ground truth pairs $m_i = GT_{api} - GT_{npi}$. This loss penalizes the model based on the margin between each positive and negative prediction. Hence the Adaptive Triplet Loss ensures the attributions order and differentiates between concepts. It is then incorporated into a novel adaptive (DML) loss function as **Equation 5:**

$$\text{Adaptive DML Loss} := L_1(P_{ap}, GT_{ap}) + L_1(P_{np}, GT_{np}) + \text{Adaptive Triplet Loss},$$

where the L1 loss function (i.e. the mean absolute error (MAE) accounts for differences between-concepts, and the Adaptive Triplet loss accounts for between and within-concept, through the margin $m_i$. In other words, while conventional DML models quantify the distances between different concepts (classes), embodiments of the present application provide that the attribution model 11 is also capable of predicting distances within a concept, by integrating the attribution scores from the attribution table 9 and employing the Adaptive DML Loss function.

In particular, the novel loss function as provided herein advantageously incorporates the attribution values (both predicted and ground truth) into the loss function. When combined with the ordered concept grouping structure of the data attribution table, for instance as described with reference to **Figure 5,** this allows for the attribution model to be particularly effective at learning within-concept (i.e. within one concept group 92) granularity as well as between concepts. State of the art systems simply are not capable of this within-concept learning, and are instead limited to broad concept level distinctions. In particular, the data attribution table 9 including ordered concept grouping of multiple fine-tuning images 73, for instance as depicted in **Figure 5,** thereby has a plurality fine-tuning images 73 in the same concept. Each of these have different attribution scores 95 with reference to the particular prompt concepts 8 and output generated images 93, and hence the determination, collection and incorporation of this plurality of attribution scores 95 within the same concept 92 allows the attribution model, through the specialized loss function including these attribution scores 95, to learn within-concept differentiation. In particular, in other words, as the different attribution scores 95 relate to the level of conceptual relevance of a plurality of different fine-tuning images 73 within the same concept group 92, conceptual distinctions within this concept group 92 can be learned by the attribution model 11 as information is incorporated into the specialized loss function, which thereby guides the learning/training process of the attribution model 11.

Hence, in specific embodiments in which the data attribution table 9 is ordered by concept grouping as previously described for instance with reference to **Figure 5,** the new Adaptive DML Loss function thereby provides for the hierarchical order of attributions to be learned, resulting in both within and between-concept understanding, thereby improving the concept attribution granularity. Hence, in embodiments of the present application, the novel adaptive DML loss function, combined with the novel data attribution table 9, may allow for the advantageous leveraging of the structure of the attribution table 9 so allow for analysis of the finer inter-concept relations, leading to increased granularity in the final predictive attributions of individual concepts in the finally trained attribution model 11. By contrast, state of the art attribution methods using contrastive attribution are limited to only broadly differentiating between concepts, not within and inter-concept differentiation.

Hence, in accordance with any embodiment as previously described, the loss functions operates to maximise the similarity (minimise the difference) between the ground truth attribution score 95 from the attribution table 9 and the predicted attribution score. Hence in this manner the attribution model 11 is trained. The training may proceed for eachimage pair combination from the attribution table 11, i.e. for every cell of the attribution table, and this may be performed iteratively, until the loss function is minimised.

Hence, in accordance with any embodiment as previously described, the attribution model 11 of the present application is trained in accordance with step S15 on the data from the attribution table 9, and such that the attribution model 11 can then be used to predict the attribution of unseen output generations - such as image generations in the context of diffusion models - on the training data, such as the fine-tuned (customised) image dataset 7. For instance, once the above-described steps S11 to S15 have been performed - in accordance with any previously described embodiment - the attribution model 11 may be frozen, i.e. it's networks and weights frozen, such that it is considered trained and can subsequently be used to perform data attribution. In other words, the information contained in the data attribution table 9 as determined in steps S11 and S13 has been advantageously generalised and learned by the attribution model 11 such that it can provide accurate data attribution to new and previously unseen output generated images as generated by the fine-tuned diffusion model 3.

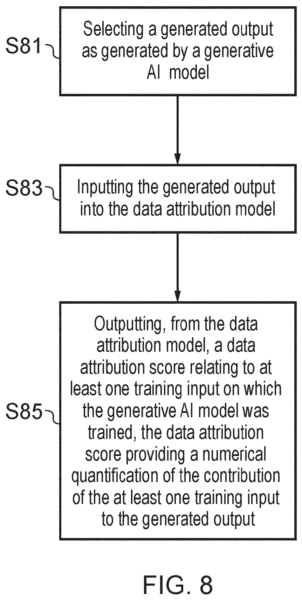

**Figure 8** a diagram illustrating the use of a trained attribution model according to an aspect. In particular, the use of the trained attribution model is to perform data attribution using an attribution model trained in accordance with any previously described aspect or embodiment of the present application.

Step S81 comprises selecting a generated output as generated by the generative AI model of any previously described aspect or embodiment of the present application.

Step S83 comprises inputting the generated output into the data attribution model.

Step S85 comprises outputting, from the data attribution model, a data attribution score relating to at least one training input on which the generative AI model was trained, the data attribution score providing a numerical quantification of the contribution of the at least one training input to the generated output.

Any of the steps of **Figure 8** may be performed by an apparatus as described with reference to **Figure 11** below.

Advantageously, this aspect of the present applications provides an accurate and efficient manner of performing data attribution on outputs of generative AI models, for instance on the images generated by diffusion models which are trained on existing image data.

In particular, the attribution model 11 is any attribution model 11 as previously described in the present application following its training in Steps S11 to S15. As such, the trained attribution model 11 is able to be used to perform data attribution on any output generated by any generative AI model as previously described on which it was trained, for instance on the diffusion model 3 as previously described where the output is an output generated image 93.

For instance, when a prompt, such as an unseen prompt, is applied to the generative AI model the generative AI model will process the prompt to create a generated output. For instance, in the context of the text-to-image diffusion model 3, the generated output would be a generated image. This generated output, such as a generated image, would then be input into the attribution model, whereby the attribution model would process the generated output and would itself output a data attribution score. The data attribution score would be a score providing a numerical quantification of the contribution of at least one of the training inputs to the generated output. Further, the data attribution model could provide a data attribution score for all of the training inputs - such as fine-tuning training image data 73 as previously described - available to it.

In a specific embodiment, the data attribution model 11 may create a data attribution table using the new prompt and the new output generation, and may provide a data attribution score for each training input, such as fine-tuned image data 73, thereby creating and completing a column of the data attribution table. This new column may be added to the original data attribution table 9 from which the attribution model 11 was trained, and the attribution model 11 may at a later stage be trained on the new data attribution table so created.

Hence, in accordance with this aspect, accurate and efficient data attribution is provided to the output of generative AI models, particularly text-to-image diffusion models 3.

Aspects of the present application have provided a novel and advantageous method for training and providing a data attribution model capable of providing accurate and efficient data attribution to generative AI models, such as diffusion models. Aspects of the present application contain several aspects which are each individually novel and advantageous, including for instance: leveraging access to the training/fine-tuning stage data, determining and providing an efficient representation of the generation process within the generative model (for instance the value tensor V of the cross-attention layer), and providing iterative updates which support continuous learning (such as in the online environment).

Accordingly, aspects of the present application provide an advantageously improved accuracy and efficiency attribution model for generative AI, and in particular for image diffusion models, wherein generated images are input into the attribution models and technical image analysis and processing is performed on the generated images to determine attributions on that generated image with respect to fine-tuning or training images. Such improved attribution models may find useful, advantageous application in a number of different fields, such as for instance:

- Model debugging, for instance identifying issues like overfitting, underfitting, or biases in the data;
- Content attribution, for instance protecting the intellectual property rights by efficiently identifying and attributing works to original creators on platforms which provide users with AI content generation. In these contexts, both accuracy and efficiency are highly important;
- Detecting poisoned/mislabelled samples, for instance by identifying incorrect, misleading, or intentionally harmful data;
- Continuous learning applications, for instance being compatible with generative models that are continually trained and updated.
- Trustworthy AI systems: Assisting in interpretability by explaining behaviour and predictions of models, for instance explaining why a model made a particular prediction, which is crucial for the development of trustworthy AI systems.

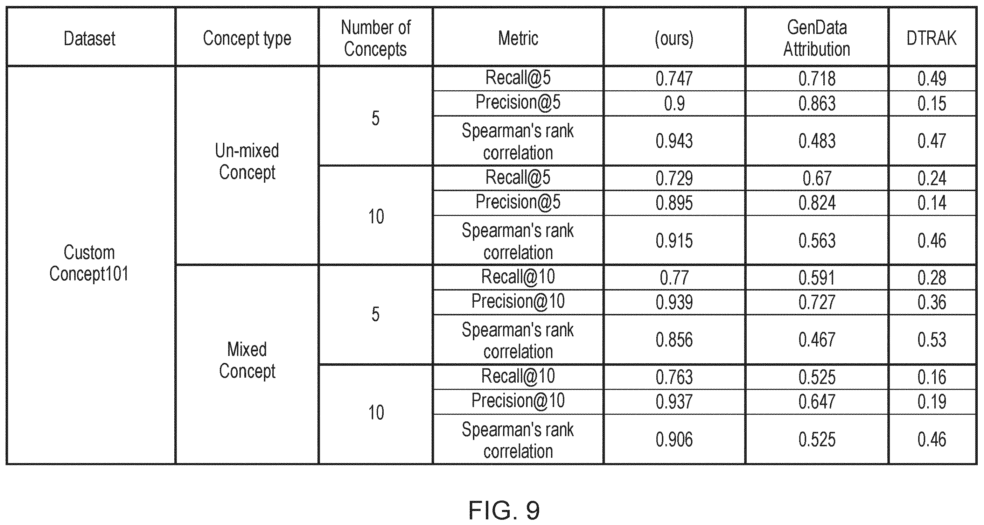

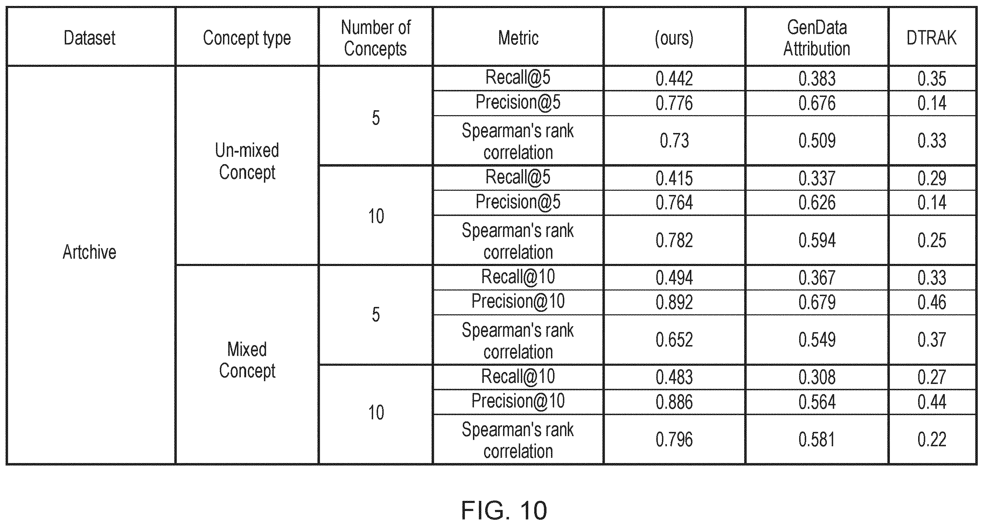

**Figure 9** illustrates a table of results of applying attribution models trained by different state of the art processes (the previously described GenDataAttribution and DTRAK) and attribution models trained by training processes as described herein (labelled 'Ours') to a data attribution task on the dataset CustomCOncept101 dataset. **Figure 10** illustrates a table of results of applying attribution models trained by different state of the art processes (the previously described GenDataAttribution and DTRAK) and attribution models trained by training processes as described herein (labelled 'Ours') to a data attribution task on the dataset Artchive dataset. In both cases, the generative model used was Custom Diffusion (Kumari, N., Zhang, B., Zhang, R., Shechtman, E., Zhu, J.Y.: Multi-concept customization of text-to-image diffusion. In: Proceedings of the IEEE/CVF Conference on Computer Vision and Pattern Recognition. pp. 1931-1941 (2023)).

The experimental setup and procedure for both **Figure 9** and **Figure 10** are the same, and hence will be described once here. To estimate the capability of attribution model's trained in accordance with the present application to be able to generalise the learned data attribution table, and hence to provide accurate predicted attribution scores, unseen (with respect to the training) generated images are used, generated with unseen prompts. Attributions are tested at the semantic concept level. Image concepts are are used as ground truth labels and the attribution model is evaluated for its ability to assign high attribution scores to input images that belong to the same concept as the generated one. The metrics used were recall@K and precision@K, which are commonly applied in DML settings, and Spearkman's rank correlation which is used to compare the ordering of the predicted attributions with the original attributions as generated by the data attribution table.

The experimental procedure was as follows. Analysis is performed on a data attribution table constructed for multi-concept model customizations (five and ten concepts), where the dataset was divided accordingly (e.g. in the CustomConcepts101 dataset, which has 101 concepts, 20 five-concept customizations and 10 ten-concept customizations were monitored). For each table, three attribution models were trained with varying seeds resulting in hundreds of attribution models. The experiment includes un-mixed concept images, where each generated image contains one concept, and mixed-concept images, where each generated images contain two concepts from the five or ten customization concepts. For recall@K and Precision@K of the unseen generated images, we set K=5 in the un-mixed concepts and K=10 in the mixed-concept (a larger K is employed since their attribution spans across more of images).

The results are as follows. The between-concepts evaluation results for 'ours', GenDataAttribution, and D-TRAK on the CustomConcept101 **(Figure 9)** and Artchive **(Figure 10)** datasets. As can be seen, 'our' models consistently outperformed GenDataAttribution and DTRAK, achieving the highest scores for all metrics in un-mixed and mixed-concept experiments. In particular, 'our' model's performance was notably superior in the mixed-concept experiments compared to the un-mixed concepts experiments. This demonstrates the advantageous ability of attribution models according to the present application to be used as for instance 'artistic style' detectors, as demonstrated by the results on the Artchive dataset.

The large performance gap between attribution models as trained in accordance with methods as outlined in the present application and those of state of the art models clearly demonstrates the advantageously enhanced capability of aspect of the present application in providing accurate data attribution, especially in regard to more complex, mixed-concept generations.

In any aspect or embodiment of the present application, the training images and images used for input into any of the models described - including for base-models and fine-tuning models - may be real world image data from a real world sensor, such as a camera.

Aspects of the present application provide a novel data attribution method of improved accuracy and efficiency, and in particular one that is highly suited for image-to-text diffusion models which are fine-tuned (customized). Aspects of the present application advantageously provide direct monitoring of the diffusion model's internal representations during training, providing increased accuracy of subsequent data attribution learning and data attribution of final output generated images in the final fine-tuned diffusion model. The monitoring stage is followed by the creation of an attribution model informed by this monitoring. The attribution model may be trained on an attribution table which aggregates information determined during the monitoring of the diffusion model's internal representations during fine-tuning.

Aspects of the present application methodology provide a unique perspective regarding how training data influences image generation, providing improved accuracy while maintaining efficiency. Further, evaluation of aspects of the present application on customization and artistic style datasets, both important use-cases of data attribution, demonstrates clear advantages in within-concept and between-concepts granularity and accuracy levels, thereby providing a valuable tool in the field of data attribution.

**Example Computer System implementation**

**Figure 11** is a block diagram of an information processing apparatus 10 or a computing device 10, such as a data storage server, which embodies the present invention, and which may be used to implement some or all of the operations of a method embodying the present invention, and perform some or all of the tasks of apparatus of an embodiment. The computing device 10 may be used to implement any of the method steps described above and/or any processes described above.

The computing device 10 comprises a processor 993 and memory 994. Optionally, the computing device also includes a network interface 997 for communication with other such computing devices. Optionally, the computing device also includes one or more input mechanisms such as keyboard and mouse 996, and a display unit such as one or more monitors 995. These elements may facilitate user interaction. The components are connectable to one another via a bus 992.

The memory 994 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a computer (e.g., one or more processors) to perform one or more functions or operations. For example, the computer-executable instructions may include those instructions for implementing a method disclosed herein, or any method steps disclosed herein, and/or any processes described above. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement any of the method steps described herein. The memory 994 stores data being read and written by the processor 993 and may store training data and/or network weights and/or patches and/or updated patches and/or embeddings and/or vectors and/or graphs and/or representations and/or difference amounts and/or equations and/or other data, described above, and/or programs for executing any of the method steps and/or processes described above. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein. The processor 993 may be considered to comprise any of the modules described above. Any operations described as being implemented by a module may be implemented as a method by a computer and e.g. by the processor 993.

Optionally, the apparatus 10 includes a display unit 995 which may display a representation of data stored by the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc. may be included in the computing device.

Methods embodying the present invention may be carried out on a computing device/apparatus 10 such as that illustrated in **Figure 11.** Such a computing device need not have every component illustrated in **Figure 11,** and may be composed of a subset of those components. For example, the apparatus 10 may comprise the processor 993 and the memory 994 connected to the processor 993. Or the apparatus 10 may comprise the processor 993, the memory 994 connected to the processor 993, and the display 995. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention may be performed by one or more programmable processors executing a computer program to perform functions of the invention by operating on input data and generating output. Apparatus of the invention may be implemented as programmed hardware or as special purpose logic circuitry, including e.g., an **FPGA** (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

For the purposes of the present disclosure, the term "machine learning model" encompasses within its scope the following concepts:

- machine Learning algorithms, comprising processes or instructions through which data may be used in a training process to generate a model artefact for performing a given task, or for representing a real world process or system;
- the model artefact that is created by such a training process, and which comprises the computational architecture that performs the task; and
- the process performed by the model artefact in order to complete the task.

References to "machine learning model", "model", model parameters", "model information", etc., may thus be understood as relating to any one or more of the above concepts encompassed within the scope of "Machine learning model".

The above-described embodiments of the present invention may advantageously be used independently of any other of the embodiments or in any feasible combination with one or more others of the embodiments.

**Alternative Embodiments**

The embodiments described above are illustrative of, rather than limiting to, the present invention. Alternative embodiments apparent on reading the above description may nevertheless fall within the scope of the invention.

**Claims**

1. A computer-implemented method of training a machine learning attribution model configured to provide data attribution to an output generation of a generative artificial intelligence (AI) model, comprising:

   determining changes in the generative AI model during a training process;
   aggregating the changes into an attribution table; and

training the attribution model comprising inputting data from the attribution table into the attribution model.

2. The computer-implemented method of claim 1, wherein determining the changes comprises determining the changes in internal representations in the generative AI model whilst training data is input into and processed by the generative AI model during the training process.

3. The computer-implemented method of claim 2, wherein determining the changes in internal representations of the generative AI model during the training process comprises, at the same time as performing the training process:

inputting prompt concepts into the generative AI model configured to cause the generative AI model to generate output generations; and
determining the changes in internal representations of the prompt concepts.

4. The computer-implemented method of claims 2 to 3, wherein the generative AI model is a diffusion model, and wherein the diffusion model is an image-to-text diffusion model.

5. The computer-implemented method of claim 4, wherein the training process comprises inputting fine-tuning data as the training data into the diffusion model, the fine-tuning data comprising image-concept pairs, each image-concept pair comprising a fine-tuning image and an associated concept comprising a text description related to the visual content of the image.

6. The computer-implemented method of claim 5, wherein determining the changes in internal representations of the diffusion model during the training process comprises, at the same time as performing the training process:

inputting prompt concepts into the diffusion model configured to cause the diffusion model to generate output generated images; and
determining the changes in internal representations of the prompt concepts.

7. The computer-implemented method of claim 6 wherein the internal representation comprises a vector representation of the prompt concept in a cross-attention layer of the diffusion model, and
wherein the internal representation comprises the value tensor of the cross-attention layer.

8. The computer-implemented method of claim 7, wherein the data attribution table comprises a data structure associating, for each output generated image generated by the prompt concept, an attribution score providing a numerical quantification of the contribution of each fine-tuning image to the output generated image, wherein the attribution score is based on the determined changes in the internal representation of the prompt concept.

9. The computer-implemented method of the claim 8, wherein the rows of the data attribution table relate to the fine-tuning images, and the columns of the data attribution table relate to the output generated images, and
wherein the data attribution table is such that the fine-tuning images are ordered and grouped by the concept taken from the associated concept of the particular image-concept pair, and wherein the output generated images are ordered and grouped by the prompt concept.

10. The computer-implemented method of claim 9, wherein the training the attribution model further comprises:
inputting, into the data attribution model, image pairs from the data attribution table, the image pairs comprising a fine-tuning image and an output generated image, and for each image pair;

creating, in an image embedding space, a fine-tuning image embedding of the fine-tuning image;
creating, in the image embedding space, an output generated image embedding of the output generated image;
performing a comparison of the fine-tuning image embedding to the output generated image embedding; and
determining, based on the comparison, a predicted attribution score providing a predicted numerical quantification of the contribution of the fine-tuning image to the output generated image.

11. The computer-implemented method of claim 10, further comprising training the attribution model to distinguish between conceptually similar and conceptually distinct pairs of image pairs, comprising for a pair of image pairs:

determining a first predicted attribution score for a first image pair, the first image pair being a positive image pair comprising a fine-tuning image and an output generated image which are conceptually similar; and

determining a second predicted attribution score for a second image pair, the second image pair being a negative image pair comprising a fine-tuning image and an output generated image which are conceptually different.

12. **The** computer-implemented method of claim 11, further comprising, for all pairs of image pairs in the data attribution table:

adjusting network weights of the attribution model based on minimizing a loss function, the loss function being:

$$= L_1 (P_{ap}, GT_{ap}) + L_1 (P_{np}, GT_{np}) + \frac{1}{B} \sum_{i=1}^{B} max\left(P_{npi} + m_i - P_{api}, 0\right)$$

where:

$L_1$ is the $L_1$ loss function, the mean absolute error;
$P_{ap}$ is the predicted attribution score of the positive image pair;
$P_{np}$ is the predicted attribution score of the negative image pair;
$GT_{ap}$ is the attribution score from the data attribution table of the positive image pair;
$GT_{np}$ is the attribution score from the data attribution table of the negative image pair;
B is the number of fine-tuning images in the data attribution table;
$P_{npi}$ is the *ith* entry of $P_{ap}$
$P_{api}$ is the *ith* entry of $P_{np}$
$m_i$ is the margin derived from the difference between the attribution score of the positive image pair and the attribution score of the negative image pair $m_i = GT_{api} - GT_{npi}$

13. The computer-implemented method of claim 12, wherein proximity in the image embedding space corresponds to conceptual similarity, and
wherein the predicted attribution is determined based on the shifted cosine similarity between the fine-tune image embeddings and the output generated image embeddings in the image embedding space.

14. A computer implemented method of performing data attribution using an attribution model trained in accordance with any preceding claim, comprising:

selecting a generated output as generated by the generative AI model of any preceding claim;
inputting the generated output into the data attribution model; and
outputting, from the data attribution model, a data attribution score relating to at least one training input on which the generative AI model was trained, the data attribution score providing a numerical quantification of the contribution of the at least one training input to the generated output.

15. A computer program which, when run on a computer, causes the computer to carry out a method in accordance with any preceding claim.

S11 — Determining changes in the generative AI model during a training process

S13 — Aggregating the changes into an attribution table

S15 — Training the attribution model comprising inputting data from the attribution table into the attribution model

FIG. 1

FIG. 2

FIG. 3

EP 4 703 969 A1

Algorithm 1

1: $\mathbf{M} \leftarrow$ Attribution Table, initialized as matrix of zeros
2: $\mathbf{D} \leftarrow$ training image-prompt pairs
3: $\mathbf{P}^{monitor} \leftarrow$ monitoring-prompt
4: $\mathbf{G} \leftarrow$ generator
5: $\mathbf{E} \leftarrow$ Text Encoder
6: Let $[x_i, c_i]$ be the $i^{th}$ image-prompt pair in $\mathbf{D}$
7: **for** each epoch **do**
8:     **for** each $[x_i, c_i] \in \mathbf{D}$ **do**
9:         $\mathbf{G}, \mathbf{E} \leftarrow$ forward + backward (optimization step) on $[x_i, c_i]$
10:         **for** each $p_j \in \mathbf{P}^{monitor}$ **do**
11:             $c_j \leftarrow \mathbf{E}(p_j)$
12:             $V_j \leftarrow \mathbf{W}^v c_j$
13:             **if** not first iteration **then**
14:                 $\mathbf{M}[i, j] += \|V_j - V_j^{prev}\|$
15:             **end if**
16:             $V_j^{prev} \leftarrow V_j$
17:         **end for**
18:     **end for**
19: **end for**

$i^{th}$ row

9

Attribution table

Monitoring prompts

Train samples

$j^{th}$ column

**FIG. 4**

FIG. 5

| | Un-mixed-concept | | | | | Mixed-concept | | | |
|---|---|---|---|---|---|---|---|---|---|
| | 15.00% | 1.90% | 2.97% | 2.77% | 5.22% | 10.03% | 1.84% | 1.81% | 3.12% |
| | 10.96% | 0.78% | 1.85% | 1.46% | 2.65% | 7.21% | 1.00% | 1.11% | 1.76% |
| | 10.50% | 0.63% | 2.90% | 3.21% | 4.02% | 6.69% | 1.41% | 2.63% | 3.21% |
| | 9.81% | 4.01% | 1.95% | 1.97% | 3.65% | 8.00% | 2.70% | 1.24% | 2.25% |
| | 12.80% | 0.67% | 3.12% | 0.83% | 3.80% | 8.07% | 1.60% | 1.67% | 1.83% |
| | 8.30% | 3.08% | 1.06% | 2.49% | 2.65% | 6.48% | 1.71% | 1.28% | 2.51% |
| | 11.05% | 0.44% | 2.60% | 0.60% | 3.60% | 6.98% | 1.11% | 1.35% | 1.76% |
| | 0.82% | 17.17% | 1.29% | 0.31% | 1.87% | 7.59% | 9.93% | 0.42% | 0.38% |
| | 0.60% | 14.82% | 0.04% | 2.60% | 1.99% | 6.56% | 7.92% | 0.78% | 2.09% |
| | 1.95% | 15.49% | 1.35% | 1.08% | 0.80% | 7.94% | 9.17% | 1.09% | 0.48% |
| | 0.05% | 14.35% | 0.39% | 0.05% | 0.02% | 5.83% | 7.87% | 0.04% | 0.03% |
| | 0.95% | 0.55% | 11.73% | 0.90% | 1.71% | 0.60% | 7.25% | 8.76% | 1.70% |
| | 0.78% | 2.32% | 12.76% | 2.05% | 3.87% | 1.35% | 8.91% | 9.78% | 3.07% |
| | 1.43% | 0.93% | 13.46% | 1.00% | 4.04% | 1.47% | 8.24% | 9.78% | 2.41% |
| | 0.76% | 0.90% | 13.71% | 1.46% | 3.06% | 0.91% | 8.51% | 10.18% | 2.29% |
| | 0.44% | 0.50% | 12.27% | 2.51% | 3.37% | 0.24% | 6.93% | 9.32% | 3.06% |
| | 1.85% | 4.75% | 1.45% | 16.84% | 5.69% | 2.50% | 2.22% | 7.57% | 11.99% |
| | 0.76% | 0.29% | 1.67% | 11.02% | 2.98% | 0.03% | 0.03% | 5.60% | 7.86% |
| | 1.77% | 3.62% | 1.07% | 11.06% | 3.47% | 2.50% | 1.76% | 4.97% | 7.74% |
| | 1.27% | 3.63% | 2.98% | 14.58% | 4.38% | 1.66% | 2.43% | 7.85% | 10.07% |
| | 3.10% | 2.43% | 1.57% | 14.44% | 4.14% | 2.44% | 1.11% | 6.73% | 10.10% |
| | 0.66% | 3.04% | 2.11% | 4.93% | 10.35% | 1.25% | 2.10% | 2.78% | 7.76% |
| | 2.24% | 2.99% | 2.12% | 1.40% | 10.10% | 2.38% | 1.92% | 1.16% | 5.46% |
| | 0.98% | 0.66% | 2.03% | 0.34% | 6.17% | 0.71% | 1.36% | 1.31% | 3.58% |
| | 1.18% | 0.05% | 1.54% | 0.11% | 6.37% | 0.58% | 0.97% | 0.81% | 3.50% |

FIG. 6

FIG. 7

EP 4 703 969 A1

S81 — Selecting a generated output as generated by a generative AI model

S83 — Inputting the generated output into the data attribution model

S85 — Outputting, from the data attribution model, a data attribution score relating to at least one training input on which the generative AI model was trained, the data attribution score providing a numerical quantification of the contribution of the at least one training input to the generated output

FIG. 8

| Dataset | Concept type | Number of Concepts | Metric | (ours) | GenData Attribution | DTRAK |
|---|---|---|---|---|---|---|
| Custom Concept101 | Un-mixed Concept | 5 | Recall@5 | 0.747 | 0.718 | 0.49 |
| | | | Precision@5 | 0.9 | 0.863 | 0.15 |
| | | | Spearman's rank correlation | 0.943 | 0.483 | 0.47 |
| | | 10 | Recall@5 | 0.729 | 0.67 | 0.24 |
| | | | Precision@5 | 0.895 | 0.824 | 0.14 |
| | | | Spearman's rank correlation | 0.915 | 0.563 | 0.46 |
| | Mixed Concept | 5 | Recall@10 | 0.77 | 0.591 | 0.28 |
| | | | Precision@10 | 0.939 | 0.727 | 0.36 |
| | | | Spearman's rank correlation | 0.856 | 0.467 | 0.53 |
| | | 10 | Recall@10 | 0.763 | 0.525 | 0.16 |
| | | | Precision@10 | 0.937 | 0.647 | 0.19 |
| | | | Spearman's rank correlation | 0.906 | 0.525 | 0.46 |

FIG. 9

| Dataset | Concept type | Number of Concepts | Metric | (ours) | GenData Attribution | DTRAK |
|---|---|---|---|---|---|---|
| Artchive | Un-mixed Concept | 5 | Recall@5 | 0.442 | 0.383 | 0.35 |
| | | | Precision@5 | 0.776 | 0.676 | 0.14 |
| | | | Spearman's rank correlation | 0.73 | 0.509 | 0.33 |
| | | 10 | Recall@5 | 0.415 | 0.337 | 0.29 |
| | | | Precision@5 | 0.764 | 0.626 | 0.14 |
| | | | Spearman's rank correlation | 0.782 | 0.594 | 0.25 |
| | Mixed Concept | 5 | Recall@10 | 0.494 | 0.367 | 0.33 |
| | | | Precision@10 | 0.892 | 0.679 | 0.46 |
| | | | Spearman's rank correlation | 0.652 | 0.549 | 0.37 |
| | | 10 | Recall@10 | 0.483 | 0.308 | 0.27 |
| | | | Precision@10 | 0.886 | 0.564 | 0.44 |
| | | | Spearman's rank correlation | 0.796 | 0.581 | 0.22 |

FIG. 10

FIG. 11

Europäisches
Patentamt

European
Patent Office

Office européen
des brevets

# EUROPEAN SEARCH REPORT

**Application Number**

EP 25 19 5867

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/281463 A1 (AYKUT TAMAY [US] ET AL) 22 August 2024 (2024-08-22) * paragraph [0001] - paragraph [0084]; figures 1-9 * | 1-15 | INV. G06N3/045 G06N3/0475 G06N5/045 |

-----

TECHNICAL FIELDS
SEARCHED        (IPC)

G06N

The present search report has been drawn up for all claims

| Place of search | Date of completion of the search | Examiner |
|---|---|---|
| The Hague | 11 December 2025 | Nourestani, S |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 19 5867

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2025

| Patent document cited in search report | Publication date | Patent family member(s) | Publication date |
|---|---|---|---|
| US 2024281463 A1 | 22-08-2024 | US 2024152544 A1 | 09-05-2024 |
| | | US 2024193204 A1 | 13-06-2024 |
| | | US 2024281463 A1 | 22-08-2024 |
| | | US 2024419720 A1 | 19-12-2024 |

EPO FORM P0459

For more details about this annex : see Official Journal of the European Patent Office, No. 12/82

**REFERENCES CITED IN THE DESCRIPTION**

**Non-patent literature cited in the description**

- **ZHENG, X.** ; **PANG, T.** ; **DU, C.** ; **JIANG, J.** ; **LIN, M.** Intriguing properties of data attribution on diffusion models. *The Twelfth International Conference on Learning Representations*, 2024, https://openrev'iew.net/forum?id=vKViCoKGcB
- **KWON, Y.** ; **WU, E.** ; **WU, K.** ; **ZOU, J.** Datainf: Efficiently estimating data influence in loRA-tuned LLMs and diffusion models. *The Twelfth International Conference on Learning Representations*, 2024, https://openreview.net/forum?id= 9m02ib92Wz
- **WANG, S.Y.** ; **EFROS, A.A.** ; **ZHU, J.Y.** ; **ZHANG, R.** Evaluating data attribution for text-to-image models. *Proceedings of the IEEE/CVF International Conference on Computer Vision*, 2023, 7192-7203
- **PARK, S. M.** ; **GEORGIEV, K.** ; **ILYAS, A.** ; **LECLERC, G.** ; **MADRY, A.** TRAK: Attributing Model Behavior at Scale. *International Conference on Machine Learning*, July 2023, 27074-27113
- **ROMBACH, R.** ; **BLATTMANN, A.** ; **LORENZ, D.** ; **ESSER, P.** ; **OMMER, B.** High-resolution image synthesis with latent diffusion models. *Proceedings of the IEEE/CVF conference on computer vision and pattern recognition*, 2022, 10684-10695
- **KUMARI, N.** ; **ZHANG, B.** ; **ZHANG, R.** ; **SHECHT-MAN, E.** ; **ZHU, J.Y.** Multi-concept customization of text-to-image diffusion. *Proceedings of the IEEE/CVF Conference on Computer Vision and Pattern Recognition*, 2023, 1931-1941